# EUROPÄISCHE PATENTSCHRIFT

(11) **EP 0 835 356 B1**
(45) Veröffentlichungstag und Bekanntmachung des Hinweises auf die Patenterteilung: **06.10.1999**
(21) Anmeldenummer: 96922738.8
(22) Anmeldetag: 27.06.1996
(51) Int. Cl.: E04D 13/14, E04D 13/16

(54) **PLASTISCH VON HAND VERFORMBARES ABDECKMATERIAL**
COVERING MATERIAL WHICH CAN BE PLASTICALLY DEFORMED BY HAND
MATERIAU DE RECOUVREMENT PLASTIQUEMENT DEFORMABLE A LA MAIN

(30) Priorität: 30.06.1995 DE 19523834
(43) Veröffentlichungstag der Anmeldung: 15.04.1998
(73) Patentinhaber: Lafarge Braas Roofing Accessories GmbH & Co. KG., 61437 Oberursel (DE)
(72) Erfinder: HOFMANN, Karl-Heinz, D-35325 Mücke (DE)
(74) Vertreter: Brüning, Rolf, Dr.rer.nat.
(86) Internationale Anmeldenummer: DE9601189
(87) Internationale Veröffentlichungsnummer: WO9702394

(56) Entgegenhaltungen:
- EP-A- 0 341 343
- WO-A-95/28536
- WO-A-95/31620
- DE-A- 4 333 247
- NL-A- 8 902 798
- DATABASE WPI Week 7218 Derwent Publications Ltd., London, GB; AN 72-25936T XP002015175 & JP,A,47 008 053 (METALLGES)

## Beschreibung

Die Erfindung betrifft plastisch von Hand verformbares in zumindest einer Richtung streckbares Abdeckmaterial mit einem Durchbrüche aufweisenden Trägerelement, das zumindest auf seiner Oberseite eine die Durchbrüche überdeckende obere Beschichtung aufweist.

Derartiges Abdeckmaterial wird in Form von Bogen, Streifen oder Bahnen beispielsweise zur Abdeckung im Dachbereich eines Bauwerkes benötigt, um den Zwischenraum zwischen der mit profilierten Dacheindeckungsplatten bedeckten Dachfläche und einem aus der Dachfläche herausragenden Bauteil wie einem Kamin, einem Fenster, einer Wand, einem Dunstrohr oder auch zwischen einem First, einem Grat oder dergleichen abzuschließen. In diesen Fällen ist ausgehend von einer im wesentlichen ebenen Fläche oder einer geraden Kante der Zwischenraum zu einer dreidimensional strukturierten Fläche wasserdicht abzudecken, wobei die dreidimensional strukturierte Oberfläche naturgemäß größer ist als deren Projektion in die Ebene. Daher muß die Abdeckung zumindest in dem auf der dreidimensional strukturierten Oberfläche aufliegenden Bereich streckbar sein.

Aus der DE-A 36 42 063 ist ein Abdeckmaterial bekannt, das in Polyisobutylen eingebettetes Streckmetallgitter als Trägerelement aufweist. Beim Strecken dieses Abdeckmaterials verformen sich die rautenförmigen Maschen des Streckmetallgitters, wobei sich bei gleichbleibenden Seitenlängen einer Masche deren Höhe und Breite entgegengesetzt zueinander verändern. Gleichzeitig ändert sich die Fläche einer Masche, so daß die Einbettungsmasse stark verformt wird und aufgrund ihrer gummielastischen Eigenschaften eine Rückstellkraft auf das Streckmetallgitter ausübt. Das bekannte Abdeckmaterial zeigt daher insbesondere nach starker Streckung ein unerwünschtes Kriechverhalten. Der Erfindung liegt die Aufgabe zugrunde, preiswertes Abdeckmaterial zum Abdecken des Zwischenraums zwischen einer ebenen Fläche und einer profilierten Fläche, insbesondere einer stark profilierten Dachfläche, zu schaffen, das zumindest in einer Richtung um mehr als 30% streckbar, quer zur Streckrichtung abbiegbar, und auf seiner gesamten Fläche bleibend formbeständig dreidimensional plastisch verformbar ist.

Die Aufgabe wird dadurch gelöst, daß die obere Beschichtung aus dünnem Flachmaterial besteht und daß das beschichtete Trägerelement zumindest entgegen der Streckrichtung um wenigstens 25% seiner ursprünglichen Länge kreppartig gestaucht ist, so daß das Abdeckmaterial eine mit unregelmäßigen kleinen Wellen versehene Oberfläche besitzt.

Infolge der Stauchung entgegen der Streckrichtung kann das Abdeckmaterial in Streckrichtung wieder problemlos auf seine ursprüngliche Länge gestreckt werden. Das Abdeckmaterial wird zumindest um die Länge kreppartig gestaucht, um die es später wieder gestreckt werden soll. Vorzugsweise wird das Abdeckmaterial um 30% bis 50% seiner ursprünglichen Länge gestaucht, so daß es bei Streckung auf die ursprüngliche Länge etwa eineinhalb mal bis doppelt so lang ist wie im Lieferzustand. Es ist also problemlos möglich, das Abdeckmaterial um 100% zu strecken, also um einen Betrag, der wesentlich höher ist als bei dem bisher bekannten Abdeckmaterial. Es versteht sich, daß das Abdeckmaterial sowohl in Längs- als auch in Querrichtung gestaucht sein kann, so daß es in allen Richtungen streckbar ist.

Das Abdeckmaterial ermöglicht gleichzeitig die Belüftung, wenn das Flachmaterial luftdurchlässig ist. Hierzu ist beispielsweise ein dünnes Vlies oder ein Gewirke besonders gut geeignet, das atmungsaktiv, diffusionsoffen und hydrophob ist. Das gekreppte Flachmaterial kann sich einer Änderung der Form und Fläche der einzelnen Durchbrüche leicht anpassen ohne zu reißen.

Das Eindringen von Wasser wird verhindert, wenn das Flachmaterial flüssigkeitsabweisend ist. Dies kann auch durch eine entsprechende Imprägnierung erreicht werden, die außerdem fungizide und flammenhemmende Bestandteile aufweisen kann.

Das Abdeckmaterial ist besonders beständig gegen Witterungseinflüsse und ultraviolette Strahlung, wenn das Flachmaterial der oberen Beschichtung aus Polyacrylnitril-Vlies besteht.

Das Abdeckmaterial ist besonders widerstandsfähig, wenn das Trägerelement auch eine untere Beschichtung aus Flachmaterial auf seiner Unterseite aufweist, also beidseitig beschichtet ist.

Das Flachmaterial der unteren Beschichtung kann aus Polyester-Vlies bestehen.

Die obere Beschichtung und die untere Beschichtung können im Bereich der Durchbrüche oder Maschen des Trägerelements miteinander verbunden sein, beispielsweise durch Schweißen oder Verkleben. Auf diese Weise ist das Trägerelement zwischen die beiden Beschichtungen eingebettet, ohne mit diesen direkt verklebt zu sein. Somit können die Beschichtungen auf den Stegen des Trägermaterials gleiten.

Das Trägerelement kann gitterartig ausgebildet sein und aus duktilem Werkstoff bestehen. Mit gitterartig im Sinne der Erfindung ist beispielsweise ein Gitter mit geraden oder gewellten Stegen oder ein Gewirke gemeint.

Bei einem Gitter mit geraden Stegen sollten diese schräg zur Streckrichtung verlaufen. Beim Strecken des Abdeckmaterials kann daher die Lage der Stege durch Winkeländerung verändert werden, so daß sich eine Änderung der Geometrie der Maschen ergibt. Bei einer Zunahme der Länge erfolgt eine Abnahme der Breite.

Eine Streckung in einer Richtung ohne Einfluß auf die Querrichtung ist möglich, weil die Stege durch das kreppartige Stauchen gewellt sind.

Ein sehr preiswertes Trägerelement ist ein Streckmetallgitter. Vorzugsweise sollte dies eine Maschenweite von etwa 10 x 5 mm, eine Stegbreite von etwa 0,4 mm und eine Blechdicke von etwa 0,3 mm besitzen.

Als korrosionsbeständiger Werkstoff für das Trägerelement wird Aluminium empfohlen, vorzugsweise weiches Aluminium. Sofern ein Streckmetallgitter aus Aluminium verwendet wird, kann dieses durch Weichglühen verbesserte duktile Eigenschaften erhalten.

Das Abdeckmaterial kann eine harte Abdeckung bilden, wenn es einen härtbaren Binder aufweist. Dies kann beispielsweise ein hydraulisch härtender Binder oder ein polymerisierbarer Kunststoff sein.

In der Zeichnung ist ein bevorzugtes Ausführungsbeispiel der Erfindung dargestellt, das im folgenden näher erläutert wird.

Es zeigt
- Fig. 1: erfindungsgemäßes Abdeckmaterial in der Draufsicht und
- Fig. 2: das Abdeckmaterial aus Fig. 1 im Längsschnitt entlang der Linie II - II.

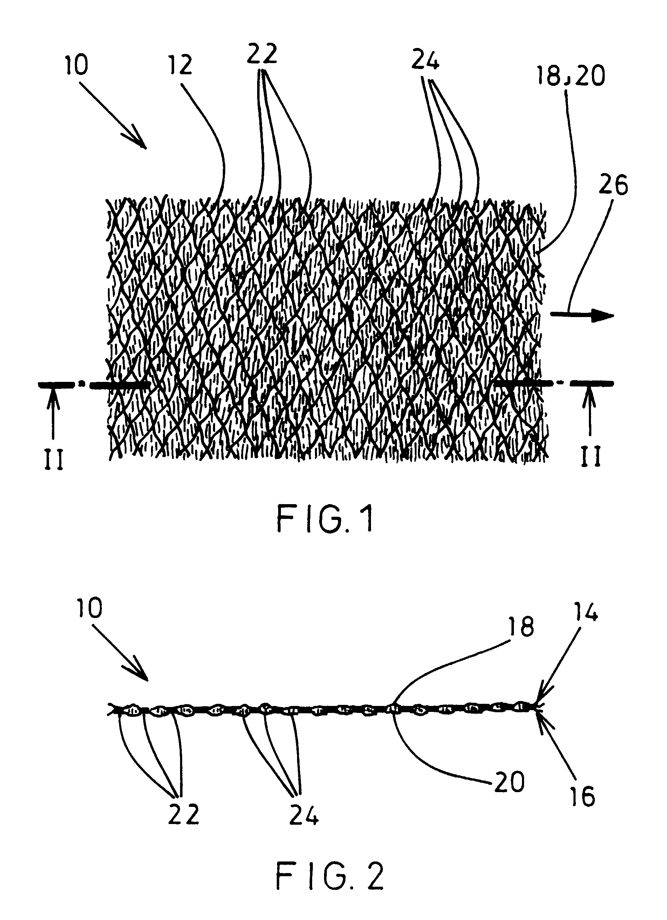

Fig. 1 und Fig. 2 zeigen das erfindungsgemäße Abdeckmaterial 10 in schematischer Darstellung in der Draufsicht bzw. im Längsschnitt. Das Abdeckmaterial 10 besitzt als Trägerelement 12 ein Streckmetallgitter, das sowohl auf seiner Oberseite 14 als auch auf seiner Unterseite 16 eine obere Beschichtung 18 bzw. eine untere Beschichtung 20 aufweist, welche Durchbrüche 22 des Trägerelements 12 überdecken. Die obere Beschichtung 18 besteht aus wasserabweisend imprägniertem Polyacrylnitril-Vlies, während die untere Beschichtung 20 aus Polyester-Vlies besteht. Im Bereich der Durchbrüche 22 ist die obere Beschichtung 18 mit der unteren Beschichtung 20 verklebt. Die Beschichtungen 18, 20 können auf den Stegen 24 des Trägerelments 12 gleiten. Nach dem Verkleben ist das beidseitig beschichtete Trägerelement 12 entgegen der Streckrichtung 26 kreppartig auf 70% seiner ursprünglichen Länge gestaucht, so daß das gekreppte Abdeckmaterial 10 um 40% seiner Länge streckbar ist.

## Patentansprüche

1. Plastisch von Hand verformbares in zumindest einer Richtung streckbares Abdeckmaterial (10) mit einem Durchbrüche (22) aufweisenden Trägerelement (12), das zumindest auf seiner Oberseite eine die Durchbrüche (22) überdeckende obere Beschichtung (18) aufweist,
**dadurch gekennzeichnet**,
daß die obere Beschichtung (18) aus dünnem Flachmaterial besteht und daß das beschichtete Trägerelement (12) zumindest entgegen der Streckrichtung (26) um wenigstens 25% seiner ursprünglichen Länge kreppartig gestaucht ist, so daß das Abdeckmaterial (10) eine mit unregelmäßigen kleinen Wellen versehene Oberfläche besitzt.

2. Abdeckmaterial nach Anspruch 1,
**dadurch gekennzeichnet**,
daß das Flachmaterial luftdurchlässig ist.

3. Abdeckmaterial nach Anspruch 1 oder 2,
**dadurch gekennzeichnet**,
daß das Flachmaterial flüssigkeitsabweisend ist.

4. Abdeckmaterial nach einem der Ansprüche 1 bis 3,
**dadurch gekennzeichnet**,
daß das Flachmaterial der oberen Beschichtung (18) aus Polyacrylnitril-Vlies besteht.

5. Abdeckmaterial nach einem der Ansprüche 1 bis 4,
**dadurch gekennzeichnet**,
daß das Trägerelement (12) auch eine untere Beschichtung (20) aus Flachmaterial auf seiner Unterseite (16) aufweist.

6. Abdeckmaterial nach Anspruch 5,
**dadurch gekennzeichnet**,
daß das Flachmaterial der unteren Beschichtung (20) aus Polyester-Vlies besteht.

7. Abdeckmaterial nach einem der Ansprüche 1 bis 6,
**dadurch gekennzeichnet**,
daß die obere Beschichtung (18) und die untere Beschichtung (20) im Bereich der Durchbrüche (22) miteinander verbunden sind.

8. Abdeckmaterial nach einem der Ansprüche 1 bis 7,
**dadurch gekennzeichnet**,
daß das Trägerelement (12) ein Streckmetallgitter ist.

9. Abdeckmaterial nach einem der Ansprüche 1 bis 8,
**dadurch gekennzeichnet,**
daß das Trägerelement (12) aus Aluminium besteht.

## Claims

1. Covering material (10) which can be plastically deformed by hand, extensible in at least one direction with a base element (12) showing openings (22), which shows at least on its upper side an upper coating (18) overlapping the openings (22),
**characterized in that**
the upper coating (18) consists of a flat material and in that, at least against the extension direction (26), the coated base element (12) is squeezed crèpe-fabriclike by at least 25 % of its initial length, so that the covering material (10) has a surface provided with irregular small waves.

2. Covering material according to claim 1,
**characterized in that**
the flat material is pervious to air.

3. Covering material according to claim 1 or 2,
**characterized in that**
the flat material is not pervious to liquids.

4. Covering material according to one of claims 1 to 3,
**characterized in that**
the flat material of the upper coating (18) consists in a fibrous web of polyacrylnitrile.

5. Covering material according to one of claims 1 to 4,
**characterized in that**
the base element (12) shows also a lower coating (20) of flat material on its lower side (16).

6. Covering material according to claim 5,
**characterized in that**
the flat material of the lower coating (20) is a fibrous web of polyester.

7. Covering material according to one of claims 1 to 6,
**characterized in that**
the upper coating (18) and the lower coating (20) are bound to each other in the area of the openings (22).

8. Covering material according to one of claims 1 to 7,
**characterized in that**
the base element (12) is a rib mesh trellis.

9. Covering material according to one of claims 1 to 8,
**characterized in that**
the base element (12) is of aluminium.

## Revendications

1. Matériau de recouvrement (10) plastiquement déformable à la main, extensible dans une direction au moins, avec un élément de soutien (12) présentant des ouvertures (22) qui présente, au moins sur son côté supérieur, un revêtement supérieur (18) recouvrant les ouvertures (22),
**caractérisé en ce que**
le revêtement supérieur (18) consiste en un matériau plat mince et en ce que, au moins dans le sens contraire à l'extension (26), l'élément de soutien (12) revêtu est comprimé tel du tissu crêpe d'au moins 25 % par rapport à sa longueur initiale si bien que le matériau de recouvrement (10) possède une surface munie de petites ondulations irrégulières.

2. Matériau de recouvrement selon la revendication 1,
**caractérise en ce que**
le matériau plat est perméable à l'air.

3. Matériau de recouvrement selon la revendication 1 ou 2,
**caractérisé en ce que**
le matériau plat est imperméable.

4. Matériau de recouvrement selon l'une des revendications 1 à 3,
**caractérisé en ce que**
le matériau plat du revêtement supérieur (18) est en tissu non-tissé de polyacrylonitrile.

5. Matériau de recouvrement selon l'une des revendications 1 à 4,
**caractérisé en ce que**
l'elément de soutien (12) présente également un revêtement inférieur (20) en matériau plat sur son côté inférieur (16).

6. Matériau de recouvrement selon la revendication 5,
**caractérisé en ce que**
le matériau plat du revêtement inférieur (20) est en tissu non-tissé de polyester.

7. Matériau de recouvrement selon l'une des revendications 1 à 6,
**caractérisé en ce que**
le revêtement supérieur (18) et le revêtement inférieur (20) sont reliés l'un à l'autre dans les zones des ouvertures (22).

8. Matériau de recouvrement selon l'une des revendications 1 à 7,
**caractérisé en ce que**
l'élément de soutien (12) est un treillis en métal déployé.

9. Matériau de recouvrement selon l'une des revendications 1 à 8,
**caractérisé en ce que**
l'élément de soutien (12) est en aluminium.
